# EUROPEAN PATENT APPLICATION

(11) **EP 1 973 020 A2**
(43) Date of publication of application: **24.09.2008**
(21) Application number: 08152965.3
(22) Date of filing: 19.03.2008
(51) Int. Cl.: G05B 19/408

(54) **Numerical controller capable of executing G-code commands in path table operation**

(30) Priority: 20.03.2007 JP 2007073080
(71) Applicant: FANUC LTD, Minamitsuru-gun, Yamanashi 401-0597 (JP)
(72) Inventor: Watanabe, Tooru c/o Fanuc Ltd., Minamitsuru-gun, Yamanashi 401-0597 (JP); Endo, Takahiko c/o Fanuc Ltd., Minamitsuru-gun, Yamanashi 401-0597 (JP)
(74) Representative: Ward, James Norman

(57) **Abstract**

A numerical controller capable of using G-code commands pursuant to ISO in a path table operation. Data of values L of a reference variable and positions of a controlled axis X on i th and (i+1) th lines are read from a path table and stored. Based on the i th and (i+1) th line data and an inputted value Lm of the reference variable, a motion path is obtained to output motion amounts of the controlled axis. Thereafter, an index i is updated, and the path table operation is performed in accordance with data in the path table and the inputted reference variable value. If a G-code is included in the read data during the path table operation, it is stored. When the reference variable value Lm reaches a reference variable value designated by a line in which the G-code is read, a command for the G-code is executed.

## Description

### BACKGROUND OF THE INVENTION

### 1. Field of the Invention

The present invention relates to a numerical controller which performs a path table operation, and particularly to a numerical controller capable of executing G-code commands pursuant to ISO (International Standards Organization) in the path table operation.

### 2. Description of the Related Art

Conventionally known numerical controllers (see JP 59-177604A and JP 3671020B) for controlling a machine tool and the like have a path table operation function. In these numerical controllers, time or the position of a spindle is used as a reference variable, and table data such that the respective positions of individual axes of the machine tool to be controlled are set corresponding to reference variable values are loaded in advance as a path table into a memory. The table-form data stored in the path table are successively read as the axes are driven.

In this path table operation, the axis positions can be freely set with respect to the reference variable values, so that a tool can be freely operated without regard to a conventional machining program. Thus, the machining time can be shortened, and the machining accuracy can be improved.

According to the path table operation function described in JP 3671020B, in particular, it is specified whether to connect the axis positions designated by the table data by a path of a linear function or of a quadratic or cubic function, and each controlled axis can be controlled so as to move between the designated positions in the path of the specified function. Thus, machining for freer shapes can be achieved with high accuracy.

In the conventional path table operation, only dedicated formats that are different from G-code commands pursuant to ISO can be registered for the table-form data. In creating table-form data for the same action as a conventional NC operation (G-code command), therefore, an operator must remember dedicated formats (commands) for a path table corresponding to the G-code command. Thus, creating the table-form data is a troublesome task.

### SUMMARY OF THE INVENTION

The present invention enables to use G-code commands pursuant to ISO in a path table operation.

A numerical controller of the present invention performs a path table operation in which a position of a controlled axis is controlled in synchronism with an input value of time or a spindle position as a reference variable, in accordance with a path table that stores commands of positions of the controlled axis respective for set values of the reference variable. According to an aspect of the invention, the path table includes G-code commands pursuant to ISO to be executed respectively at set values of the reference variable, and the numerical controller comprises: reading means that successively reads the commands respective for the set values of the reference variable from the path table; determining means that determines whether or not the command read from the path table includes one of the G-code commands; and executing means that executes the read G-code command when the input value of the reference variable reaches the set value of the reference variable at which the read G-code command is to be executed. Thus, the G-code commands pursuant to ISO can also be used in the path table operation.

According to another aspect of the invention, the path table including a command of calling a G-code program pursuant to ISO to be executed at a set value of the reference variable, and the numerical controller comprises: reading means that successively reads the commands respective for the set values of the reference variable from the path table; determining means that determines whether or not the command read from the path table includes the command of calling the G-code program; and means that calls and starts executing the G-code program when the input value of the reference variable reaches the set value of the reference variable at which the read command of calling the G-code program is to be executed. Thus, the G-code command can be executed in the path table operation.

According to the present invention, functions commanded by the G-code pursuant to ISO can be executed in response to the G-code commands even during the path table operation, so that table data can be easily created without using a dedicated format for the path table operation.

### BRIEF DESCRIPTION OF THE DRAWINGS

FIG. 1 is a schematic block diagram of a numerical controller according to one embodiment of the present invention;
FIG. 2 is a diagram showing the moved position of an X-axis as a controlled axis compared with a reference variable value L according to a first embodiment of the invention;
FIG. 3 is a flowchart showing an algorithm of processing for a path table operation according to the first embodiment;
FIG. 4 is a diagram showing the moved position of the X-axis as a controlled axis compared with the reference variable value L according to a second embodiment of the invention; and
FIG. 5 is a flowchart showing an algorithm of processing for the path table operation according to the second embodiment.

### DETAILED DESCRIPTION

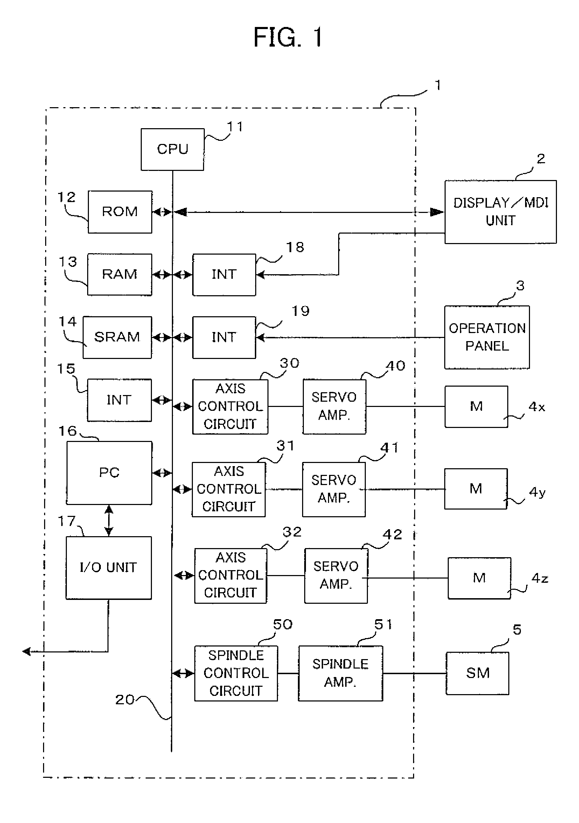

FIG. 1 is a schematic block diagram of a numerical controller 1 according to one embodiment of the present invention. A CPU 11 is a processor for generally controlling the numerical controller 1. The CPU 11 reads a system program stored in a ROM 12 through a bus 20 and controls the entire numerical controller in accordance with the system program. A RAM 13 is loaded with temporary calculation data, display data, and various data that are inputted by an operator through a display/MDI unit 2, which includes a display composed of a CRT or liquid crystal and manual input means composed of a keyboard or the like. An SRAM 14 is composed of a nonvolatile memory that is backed up by a battery (not shown) so that its memory state can be maintained even when the power of the numerical controller 1 is turned off. The SRAM 14 is stored with a machining program read through an interface 15, a machining program inputted through the display/MDI unit 2, etc.

The interface 15 enables connection between the numerical controller 1 and an external device. APC (programmable controller) 16 outputs a signal to an auxiliary device (e.g., actuator such as a robot hand for tool replacement) of a machine tool as a controlled object through an I/O unit 17 and controls it in accordance with a sequence program stored in the numerical controller 1. Further, signals from various switches and the like on a control panel that is attached to a body of the machine tool to be controlled by the numerical controller are received, subjected to necessary signal processing, and then delivered to the CPU 11.

The display/MDI unit 2 is connected to the bus 20 through an interface 18. Further, a control panel 3 is connected to the bus 20 through an interface 19.

Axis control circuits 30, 31 and 32 receive motion commands for individual axes from the CPU 11 and output them to servo amplifiers 40, 41 and 42. On receipt of these commands, the servo amplifiers 40, 41 and 42 drive servomotors 4x, 4y and 4z, respectively, for the individual axes of the machine tool (controlled object). The servomotors 4x, 4y and 4z for the individual axes individually contain position/speed sensors and feed back position/speed feedback signals from the position/speed sensors to the axis control circuits 30 to 32. The axis control circuits 30 to 32 for the individual axes perform position and speed feedback control based on the motion commands from the CPU 11 and the position/speed feedbacks. The position/speed feedbacks are not shown in FIG. 1.

Further, a spindle control circuit 50 receives a spindle rotation command and outputs a spindle speed signal to a spindle amplifier 51. On receipt of the spindle speed signal, the spindle amplifier 51 rotates a spindle motor 5 at a commanded rotational speed. The rotational speed of the spindle motor is detected by a position encoder, and speed feedback control is performed by the spindle control circuit 50. A speed feedback from the position encoder is not shown in FIG. 1.

The hardware configuration of the numerical controller is the same manner as a conventional one. The numerical controller differs from the conventional one in that the SRAM 14 is loaded with path table data including G-codes such that a path table operation is performed based on the path table data.

An example of a program for the path table operation will be described first.

Let it be supposed that the following program is created in accordance with G-code commands pursuant to ISO.

| | |
|---|---|
| G00 X0.0 | ··· 1st line |
| G00 X100.0 | ··· 2nd line |
| G26 | ··· 3rd line |
| G96 S200 | ··· 4th line |
| G00 X550.0 | ··· 5th line |
| G97 | ··· 6th line |
| G25 | ··· 7th line |
| G00 X500.0 | ··· 8th line |
| ··· | |
| ··· | |

In this program, "G00" is a fast-forward positioning command, and "X□□" represents an X-axis position of a controlled axis. Further, "G26" is a start command for spindle speed monitoring; "G96 S200", a constant peripheral speed control start command, "G97", a constant peripheral speed control end command, and "G25", a command for terminating the monitoring.

This program example is arranged as follows. An X-axis is located in positions "0.0" and "100.0" in a fast-forward mode in response to 1st and 2nd line commands, respectively, and monitoring of the spindle speed is started in response to a 3rd line command. Then, the constant peripheral speed control start command is issued as a 4th line command so that the spindle peripheral speed is "200". The X-axis is located in a position "550.0" in the fast-forward mode in response to a 5th line command, and the constant peripheral speed control end command is issued as a 6th line command. Subsequently, the spindle speed monitoring is terminated in response to a 7th line command, and the X-axis is located in a position "500.0" in the fast-forward mode in response to an 8th line command.

In performing the path table operation based on this program, table-form data is conventionally set and stored in a path table in the following manner. This data will hereinafter be referred to as a path table data example 1.

### [Path table data example 1]

| | |
|---|---|
| L0 X0.0 R1 | ··· 1st line |
| L900 X100.0 R1 | ··· 2nd line |
| L1000 R61 | ··· 3rd line |
| L1050 R41 S200 | ··· 4th line |
| L1100 X100.0 R1 | ··· 5th line |
| L2100 X550.0 R1 | ··· 6th line |
| L2150 R40 | ··· 7th line |
| L2200 R60 | ··· 8th line |
| L2300 X550.0 R1 | ··· 9th line |
| L4300 X500.0 R1 | ··· 10th line |
| ... | |
| ... | |

In the above table-form data for the path table, "L□□" represents the value of a reference variable, and "X□□" represents the position of the X-axis to be controlled during the path table operation. "R1" is a command for contour control based on a linear function. In response to this command, the motion commands are distributed so that the contour control is performed for connection by a linear-function straight line between the respective positions of individual controlled axes designated by the path table. If this command is issued as R2 and R3, moreover, it can order quadratic-function connection and cubic-function connection. This point is described in Japanese Patent No. 3671020 and is not directly related to the present invention, so that a detailed description thereof is omitted.

Further, "R61" represents a dedicated format for the path table for a spindle speed monitoring start command corresponding to the G-code command "G26" pursuant to ISO. "R60" represents a dedicated format for the path table for a spindle speed monitoring end command corresponding to the G-code command "G25" pursuant to ISO. Furthermore, "R41" represents a dedicated format for the path table for a constant peripheral speed control start command corresponding to the G-code command "G96" pursuant to ISO, and "R40" for a constant peripheral speed control end command corresponding to the G-code command "G97" pursuant to ISO.

The commands based on this path table are table-form data arranged as follows. The X-axis as a controlled axis is located in the position "0.0" with the reference variable value L at "0" in response to the 1st line command. When the reference variable value L becomes "900" in response to the 2nd line command, the motion commands based on the contour control for the connection by the linear-function straight line designated by "R1" are ordered to be distributed so that the X-axis reaches the position "100.0". When the reference variable value L becomes " 1000" in response to the 3rd line command, the monitoring of the spindle speed is started in accordance with the command "R61". When the reference variable value L becomes "1050" in response to the 4th line command, the constant peripheral speed control is commanded so that the spindle peripheral speed is "200". When the reference variable value L becomes "1100" in response to the 5th line command, the motion commands based on the contour control for the connection by the linear-function straight line are ordered to be distributed so that the X-axis reaches the position "100.0". When the reference variable value L becomes "2100" in response to the 6th line command, the motion commands based on the contour control for the connection by the linear-function straight line are ordered to be distributed so that the X-axis reaches the position "550.0". When the reference variable value L becomes "2150" in response to the 7th line command, termination of the constant peripheral speed control is commanded. When the reference variable value L becomes "2200" in response to the 8th line command, the spindle speed monitoring is terminated in accordance with the command "R60". When the reference variable value L becomes "2300" in response to the 9th line command, the motion commands based on the contour control for the connection by the linear-function straight line are ordered to be distributed so that the X-axis reaches the position "550.0". When the reference variable value L becomes "4300" in response to the 10th line command, the motion commands based on the contour control for the connection by the linear-function straight line are ordered to be distributed so that the X-axis reaches the position "500.0".

In the case where the monitoring of the spindle speed and the like are thus commanded in the course of the path table operation, the G-code commands "G26", "G25", "G96" and "G97" pursuant to ISO cannot be used, and the dedicated format commands for the path table, "R61", "R60", "R41" and "R40", must be used.

In the path table operation according to the present invention, moreover, the conventional G-code commands pursuant to ISO can be used in the table-form data.

In the program example described above, table-form data (hereinafter referred to a path table data example 2) according to the present embodiment based on the G-code commands pursuant to ISO is given as follows.

### [Path table data example 2]

| | |
|---|---|
| L0 X0.0 R1 | ··· 1st line |
| L900 X100.0 R1 | ··· 2nd line |
| L1000 G26 | ... 3rd line |
| L1050 G96 S200 | ··· 4th line |
| L1100 X100.0 R1 | ··· 5th line |
| L2100 X550.0 R1 | ··· 6th line |
| L2150 G97 | ··· 7th line |
| L2200 G25 | ··· 8th line |
| L2300 X550.0 R1 | ··· 9th line |
| L4300 X500.0 R1 | ··· 10th line |
| ··· | |
| ··· | |

The table-form data of the present embodiment differs from the conventional path table data only in that the commands "R61" and "R60" for the start and end of the spindle speed monitoring are replaced by the G-code commands "G26" and "G25" pursuant to ISO, respectively, and that the commands "R41" and "R40" for the start and end of the constant peripheral speed control are replaced by the G-code commands "G96" and "G97" pursuant to ISO, respectively.

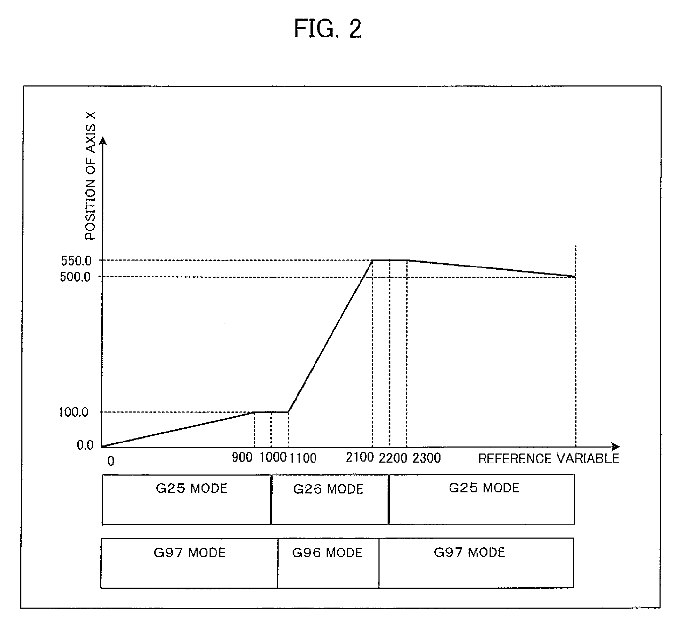

FIG. 2 is a diagram showing the moved position of the X-axis as a controlled axis compared with the reference variable value L based on the path table data described above. The spindle speed is not monitored (G25 mode) before the command "G26" is issued with "1000" reached by the reference variable value L in response to the 3rd line command of the path table. When the command "G26" is issued with "1000" reached by the reference variable value L, the spindle speed monitoring is started to establish a G26 mode. When the command "G25" is then issued with "2200" reached by the reference variable value L in response to the 8th line command of the path table, the G25 mode is established in which the spindle speed monitoring is not performed.

Thus, according to the present embodiment, the G-code commands pursuant to ISO can be used in the path table data.

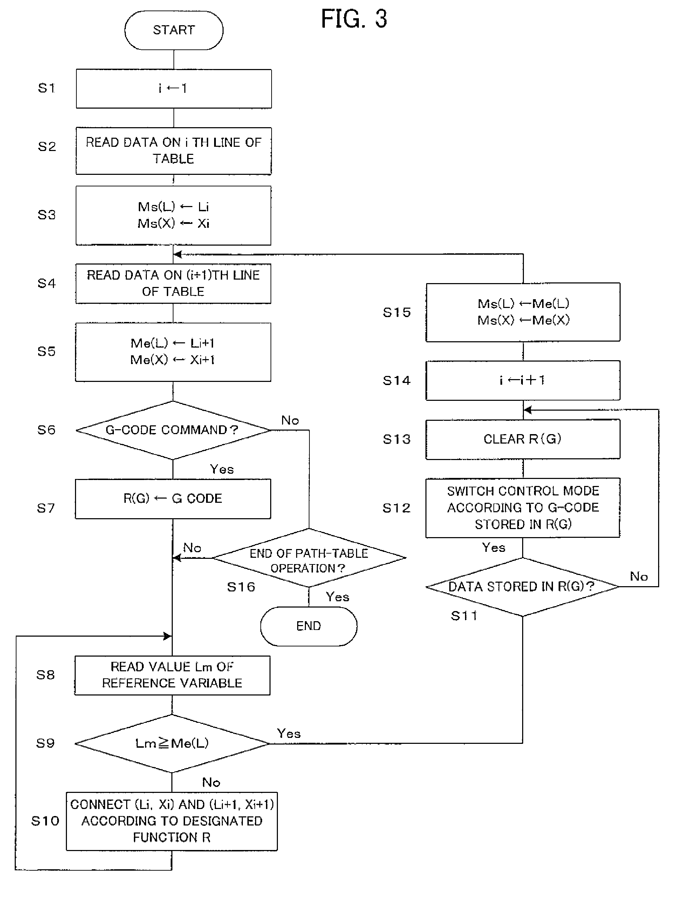

FIG. 3 is a flowchart showing an algorithm of processing for the path table operation the CPU 11 of the numerical controller 1 executes in accordance with the path table data including the G-code commands pursuant to ISO.

Although the value of the reference variable stored in the path table is designated by "L", a reference variable value that is inputted in order to actually synchronize the controlled axes is designated by "Lm" in this flowchart.

When a path table operation command is inputted, the CPU 11 of the numerical controller 1 sets an index i for designating a position in which the path table data is read to "1" (Step S1), and reads command data on an i th line from the path table stored in the SRAM 14 (Step S2). A reference variable value Li for the read data is loaded into a register Ms(L) that stores a reference variable value for the starting point of a motion path, and a command position Xi of the controlled axis (X-axis) is loaded into a register Ms(X) that stores the position of the X-axis at the starting point of the motion path (Step S3).

Then, command data on an (i+1) th line is read from the path table (Step S4). A reference variable value Li+1 for the read data is loaded into a register Me(L) that stores a reference variable value for the end point of the motion path, and a command position Xi+1 of the controlled axis (X-axis) is loaded into a register Me(X) that stores the position of the X-axis at the end point of the motion path (Step S5).

Then, it is determined whether or not the read data is a G-code (Step S6). If the data is not a G-code, it is determined whether or not the data is a path table operation end command (Step S16). If the data is not the path table operation end command, the inputted value Lm of the reference variable is read (Step S8), and it is determined whether the read reference variable value Lm is not smaller than the reference variable value for the end point of the motion path stored in the register Me(L) (Step S9). If the reference variable value for the end point is not reached, distribution processing of a motion command by contour control for connecting the starting point position stored in the registers Ms(L) and Ms(X) and the end point position stored in the registers Me(L) and Me(X) is performed according to the function R designated in the (i+1) th line of the path table, and a motion amount to the controlled axis (X-axis) for each distribution period is outputted to the axis control circuit for the X-axis (Step S10). Then, the processing returns to Step S8, and the processes of Steps S8 to S10 are executed for each distribution period.

If it is concluded in Step S9 that the read reference variable value Lm is not smaller than the reference variable value for the end point of the motion path stored in the register Me(L), it is determined whether or not a G-code is stored in a register R(G) for storing the G-code (Step S11). Since the register R(G) is initially loaded with no data, the processing proceeds from Step S11 to Step S14, whereupon the index i is incremented by 1. Then, the reference variable value to be stored in the register Me(L) and the position of the controlled axis (X-axis) to be stored in the register Me(X) are loaded into the registers Ms(L) and Ms(X), respectively, whereby the next starting point positions are loaded into the registers Ms(L) and Ms(X) (Step S15). Then, the processing returns to Step S4, whereupon the command data in the (i+1) th line is read. The reference variable value Li+1 for the read data is loaded into the register Me(L), the command position Xi+1 of the controlled axis (X-axis) is loaded into the register Me(X), and the end point positions of the next path are loaded into the registers Me(L) and Me(X) (Step S5).

If it is concluded in Step S6 that the read data is a command for a G-code, moreover, this G-code is loaded into the register R(G) (Step S7), whereupon the processing proceeds to Step S8.

If it is concluded in Step S11 that the G-code is stored in the register R(G), furthermore, the G-code command stored in the register R(G) is executed. Thereupon, the control mode is switched according to the G-code (Step S12), the register R(G) is cleared (Step S13), and the processing then proceeds to Step S14.

When the table operation end command is then read (Step S16) after the aforesaid processes are executed, this table operation processing terminates.

The following is a description of the present embodiment in connection with the path table data example 2. First, the data in the 1st line is read with the index i set at 1, "0" and "0.0" are loaded into the registers Ms(L) and Ms(X), respectively, in Step S3, and "900" and "100.0" are loaded into the registers Me(L) and Me(X), respectively, in Step S5. Based on the processes of Steps S8 to S10, motion commands based on contour control for the connection by the linear function R1 for (L, X) from (0, 0.0) to (900, 100.0) are distributed, as shown in FIG. 2, whereupon the motion commands are outputted to the axis control circuit (30) for the controlled axis (X-axis).

If the read reference variable value Lm becomes not smaller than "900" stored in the register Me(L), "900" and "100.0" are loaded into the registers Ms(L) and Ms(X), respectively, in Step S15, and the data "L1000 G26" in the 3rd line is read in Step S4, so that "1000" is loaded into the register Me(L). However, the register Me(X) is kept stored with "100.0" without being reloaded. Since "G26" is read, moreover, the processing proceeds from Step S6 to Step S7, whereupon the code "G26" for the spindle speed monitoring start command is stored into the register R(G). Then, the processes of Step S8 to S10 are executed. In these processes, the motion commands are outputted in the straight-line path based on the commanded linear function R1 with (L, X) from (900, 100.0) to (1000, 100.0), as shown in FIG. 2.

If the read reference variable value Lm becomes not smaller than "1000" stored in the register Me(L), the processing proceeds to Step S11, whereupon the storage of the code "G26" in the register R(G) is detected. Accordingly, the code command G26 is executed, and the spindle speed monitoring is started (Step S12). Then, the memory in the register R(G) is cleared (Step S13), whereupon the processing proceeds to Step S14. The index i is incremented, and "1000" and "100.0" are loaded into the registers Ms(L) and Ms(X), respectively. The data "1050'' in the 4th line of the path table is loaded into the register Me(L), and the code "G96" is stored into the register R(G) (the value stored in the register Me(X) is not changed). In the processes of Steps S8 to S10, the motion commands are outputted in the straight-line path based on the commanded linear function R1 with (L, X) from (1000, 100.0) to (1050, 100.0), as shown in FIG. 2.

If the read reference variable value Lm becomes not smaller than "1050" stored in the register Me(L), the constant peripheral speed (S = 200) control start command based the code "G96" stored in the register R(G) is outputted in the process of Step S12, whereupon a G96 mode or constant peripheral speed control mode is established.

Then, "1050" and "100.0" are loaded into the registers Ms(L) and Ms(X), respectively, while the data "1100" and "100.0" in the 5th line are loaded into the registers Me(L) and Me(X). In the processes of Steps S8 to S10, the motion commands are outputted in the straight-line path based on the commanded linear function R1 with (L, X) from (1050, 100.0) to (1100, 100.0), as shown in FIG. 2.

If the read reference variable value Lm becomes not smaller than "1100" stored in the register Me(L), "1100" and "100.0" are loaded into the registers Ms(L) and Ms(X), respectively, while the data "2100" and "550.0" in the 6th line of the path table are loaded into the registers Me(L) and Me(X). The motion commands are outputted in the straight-line path based on the commanded linear function R1 with (L, X) from (1100, 100.0) to (2100, 550.0), as shown in FIG. 2.

If the read reference variable value Lm becomes not smaller than "2100" stored in the register Me(L), "2100" and "550.0" are loaded into the registers Ms(L) and Ms(X), respectively, while the data "2150" in the 7th line of the path table is loaded into the register Me(L). The register Me(X) is kept stored with "550.0" without being reloaded. Further, "G97" is loaded into the register R(G).

If the read reference variable value Lm becomes not smaller than "2150" stored in the register Me(L), the constant peripheral speed control start command based the code "G97" stored in the register R(G) is outputted in Step S12, whereupon a G97 mode or constant peripheral speed control cancel mode is established, as shown in FIG. 2.

Then, "2150" and "550.0" are loaded into the registers Ms(L) and Ms(X), respectively, the data in the 8th line is read, "2200" and "G25" are loaded into the registers Me(L) and R(G), respectively, and the register Me(X) is kept stored with "550.0" without being reloaded. Further, the motion commands are outputted in the straight-line path based on the commanded linear function R1 with (L, X) from (2150, 550.0) to (2200, 550.0).

If the read reference variable value Lm becomes not smaller than "2200" stored in the register Me(L), the processing proceeds from Steps S9 and S11 to Step S12, whereupon the spindle speed monitoring end command based on the code "G25" stored in the register R(G) is outputted (Step S12). Then, "2200" and "550.0" are loaded into the registers Ms(L) and Ms(X), respectively, while the data "2300" and "550.0" in the 9th line of the path table are loaded into the registers Me(L) and Me(X). The motion commands are outputted in the straight-line path based on the commanded linear function R1 with (L, X) from (2200, 550.0) to (2300, 550.0).

If the read reference variable value Lm becomes not smaller than "2300" stored in the register Me(L), moreover, "2300" and "550.0" are loaded into the registers Ms(L) and Ms(X), respectively, while the data "4300" and "500.0" in the 10th line of the path table are loaded into the registers Me(L) and Me(X). The motion commands are outputted in the straight-line path based on the commanded linear function R1 with (L, X) from (2300, 550.0) to (4300, 500.0).

In the embodiment described above, G-code identification means and registers that store G-codes are provided so that G-code commands, such as the spindle speed monitoring, can be executed based on the G-codes that are set and stored in the path table during the path table operation. Alternatively, however, a G-code program may be configured to be read and executed during the path table operation.

The following is a description of an example of path table data (hereinafter referred to a path table data example 3) that includes a call command for the G-code program.

### [Path table data example 3]

| | |
|---|---|
| L0 X0.0 R1 | ··· 1st line |
| L900 X100.0 R1 | ··· 2nd line |
| L1000 M98 P9998 | ··· 3rd line |
| L1100 X100.0 R1 | ··· 4th line |
| L2100 X550.0 R1 | ··· 5th line |
| L2300 X550.0 R1 | ··· 6th line |
| L4300 X500.0 R1 | ··· 7th line |
| ··· | |
| ··· | |

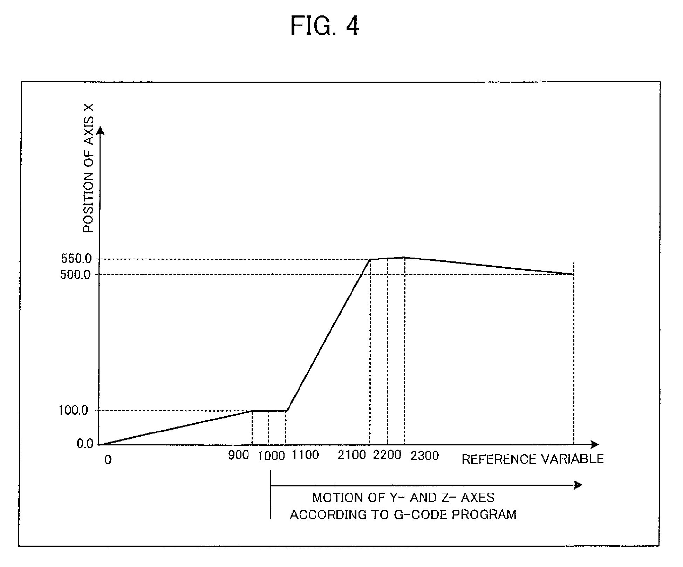

FIG. 4 shows the motion path of the X-axis based on the path table data.

In this path table data, "M98" in the 3rd line is a command for reading the G-code program, and "P9998" is a command for designating a G-code program 09998 to be read. The G-code program 09998 may, for example, be given as follows:
09998
G00 Y0.0 Z10.0
G02 Y10.0 Z0.0 R10.0
G01 Y20.0 Z0.0
...
...

In the path table data described above, "L1000" with which the G-code program read command "M98" in the 3rd line is issued is a reference variable value for starting timing at which the G-code program is executed as a sub-program.

In this case, the path table operation is executed, and the G-code program is also executed by a separate task. Therefore, the controlled axis that is drivingly controlled in the path table operation is different from the controlled axis that is drivingly controlled by the G-code program. In the example described above, the X-axis is drivingly controlled in the path table operation, while the Y- and Z-axes are drivingly controlled in accordance with the G-code program.

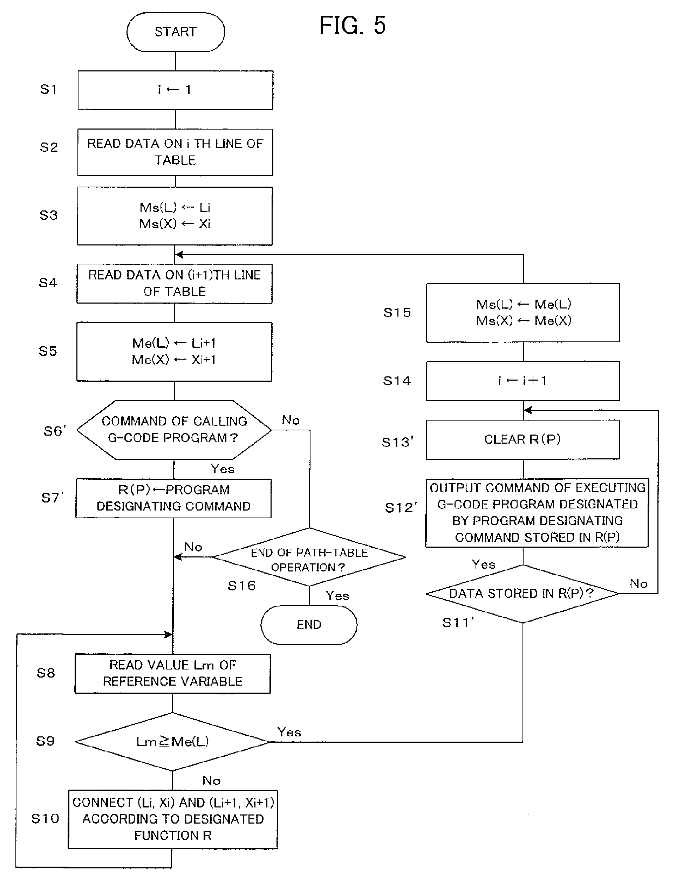

FIG. 5 is a flowchart showing an algorithm of processing for the path table operation during which the G-code program is called and executed.

This processing is substantially the same as the processing shown in FIG. 3. The Steps S6, S7, S11, S 12 and S 13 of the processing shown in FIG. 3 is replaced by Steps S6', S7', S11', S12' and S 13' in the processing shown in FIG 5. The same processes in the two flowcharts are designated by like step numbers.

When a path table operation command is inputted, the CPU 11 of the numerical controller 1 starts the processes of Step S1 and the subsequent steps. Since the processes of Steps S1 to S5 are the same as those according to the first embodiment shown in FIG. 3, a description thereof is omitted.

When a G-code program read command (M98) is read based on the read path table data (Step S6'), a program designating command is loaded into a register R(P) that stores a read program designating command (Step S7').

Then, the same processes as those of Steps S8 to S10 of FIG. 3 are executed, and motion commands are outputted to the controlled axis (X-axis). If the read reference variable value Lm becomes not smaller than the reference variable value for the end point of the path stored in the register Me(L), it is determined whether or not the register R(P) stores the program designating command (a program number) (Step S11'). If not, the same processes of Steps S14 and S15 as those shown in FIG. 3 are performed, whereupon the processing returns to Step S4. If the register R(P) stores the program designating command, on the other hand, an execution command for a G-code program designated by the stored program designating command is outputted (Step S12'), and stored data in the register R(P) is cleared (Step S13'), whereupon the processing proceeds to Step S 14.

If the execution command for the designated G-code program is outputted in Step S12', the CPU 11 then executes the G-code program for the designated program number by a task that is separate from the task for the path table operation.

When the data in the 3rd line in the aforesaid path table data example 3 is read, the program designating command "P9998" is loaded into the register R(P) in Step S7'. If the read reference variable value Lm becomes not smaller than the reference variable value "1000" for the program call command designated by the data in the 3rd line, an execution command for the program "09998" based on the program designating command is outputted in Step S12', so that the aforementioned G-code program "09998" is executed. In consequence, the X-axis is drivingly controlled in the path table operation, while the Y- and Z-axes are drivingly controlled in accordance with the G-code program.

## Claims

1. A numerical controller for performing a path table operation in which a position of a controlled axis is controlled in synchronism with an input value of time or a spindle position as a reference variable, in accordance with a path table that stores commands of positions of the controlled axis respective for set values of the reference variable, said path table including G-code commands pursuant to ISO to be executed respectively at set values of the reference variable, said numerical controller comprising:
reading means that successively reads the commands respective for the set values of the reference variable from the path table;
determining means that determines whether or not the command read from the path table includes one of the G-code commands; and
executing means that executes the read G-code command when the input value of the reference variable reaches the set value of the reference variable at which the read G-code command is to be executed.

2. A numerical controller for performing a path table operation in which a position of a controlled axis is controlled in synchronism with an input value of time or a spindle position as a reference variable, in accordance with a path table that stores commands of positions of the controlled axis respective for set values of the reference variable, said path table including a command of calling a G-code program pursuant to ISO to be executed at a set value of the reference variable, said numerical controller comprising:
reading means that successively reads the commands respective for the set values of the reference variable from the path table;
determining means that determines whether or not the command read from the path table includes the command of calling the G-code program; and
means that calls and starts executing the G-code program when the input value of the reference variable reaches the set value of the reference variable at which the read command of calling the G-code program is to be executed.
